(19) Europäisches Patentamt

European Patent Office

Office européen des brevets

(11) EP 1 039 100 A2

## (12) EUROPÄISCHE PATENTANMELDUNG

(43) Veröffentlichungstag:
27.09.2000 Patentblatt 2000/39

(51) Int Cl.⁷: **F01L 1/344**

(21) Anmeldenummer: 00890092.0

(22) Anmeldetag: 23.03.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **23.03.1999 AT 53899**
**01.07.1999 AT 114299**
**12.05.1999 AT 85499**

(71) Anmelder: **TCG UNITECH Aktiengesellschaft**
**4560 Kirchdorf/Krems (AT)**

(72) Erfinder: **Heer, Siegfried, Ing.**
**4560 Kirchdorf/Krems (AT)**

(74) Vertreter: **Babeluk, Michael, Dipl.-Ing. Mag.**
**Patentanwalt**
**Mariahilfer Gürtel 39/17**
**1150 Wien (AT)**

(54) **Vorrichtung zur Verstellung einer Nockenwelle einer Brennkraftmaschine mit innerer Verbrennung**

(57) Die Erfindung betrifft eine Vorrichtung zur Verstellung einer Nockenwelle (1) einer Brennkraftmaschine mit innerer Verbrennung, mit einem Antriebsrad (3) zum Antrieb einer Nockenwelle (1), das koaxial zur Nockenwelle (1) angeordnet ist, sowie mit einem Elektromotor zur Verdrehung der Nockenwelle (1) in Bezug auf das Antriebsrad (3), wobei der Elektromotor zwei konzentrisch zueinander angeordnete Rotoren (2, 5) aufweist, von denen einer mit der Nockenwelle (1) und der andere mit dem Antriebsrad (3) in Verbindung steht. Eine einfache und sichere Verstellung wird dadurch erreicht, dass mit einem der Rotoren (2, 5) eine erste Spulenanordnung (17, 27, 37, 58) verdrehfest verbunden ist, die mit einer feststehenden Spulenanordnung (16, 26, 36, 59) in elektromagnetischer Wechselwirkung steht, um die für den Betrieb des Elektromotors erforderliche Energie zu induzieren oder zu übertragen.

Fig.1

EP 1 039 100 A2

**Beschreibung**

Die Erfindung betrifft eine Vorrichtung zur Verstellung einer Nockenwelle gemäß dem Oberbegriff von Patentanspruch 1.

Um in verschiedenen Bereichen des Motorkennfeldes von Brennkraftmaschinen mit innerer Verbrennung optimale Verbrauchs- und Abgaswerte zu erzielen, ist es erforderlich, die Ventilsteuerzeiten in Abhängigkeit verschiedener Betriebsparameter zu verändern. Eine solche Veränderung der Steuerzeiten kann in eleganter Weise durch eine Verdrehung der Nockenwelle in Bezug auf das sie antreibende Rad bewirkt werden. Die Nockenwelle einer Brennkraftmaschine wird üblicherweise durch ein Kettenrad, das mit der Kurbelwelle über eine Antriebskette verbunden ist, oder ein als Riemenscheibe ausgebildetes Antriebsrad, das über einen Zahnriemen mit der Kurbelwelle in Verbindung steht, angetrieben.

Die GB 2 221 513 A zeigt eine Verstellvorrichtung für Nockenwellen, bei der ein Elektromotor eine Gruppe von Hebeln betätigt, die die Nockenwelle gegenüber dem Antriebsrad verdrehen. Zu diesem Zweck wird ein Betätigungselement, an dem die Hebel angelenkt sind, in Axialrichtung verschoben. Eine solche Lösung ist jedoch aufwendig und aufgrund der Vielzahl von Lagern mit einem großen Spiel behaftet.

Aus der DE 41 10 088 C1 und aus der DE 39 29 619 A1 sind Verstelleinrichtungen bekannt, bei denen zwischen einem mit der Nockenwelle in Verbindung stehenden Bauteil und einem mit dem Antriebsrad in Verbindung stehenden Bauteil ein Verstellelement vorgesehen ist, das zwei Schrägverzahnungen aufweist, die mit entsprechenden Verzahnungen der Nockenwelle bzw. des Antriebsrades in Eingriff stehen. Durch eine Axialverschiebung dieses Verstellelements kann eine Verdrehung der Nockenwelle gegenüber dem Antriebsrad bewirkt werden. Eine Möglichkeit der Axialverschiebung des Verstellelements ist dabei die Betätigung durch einen Hydraulikkolben, der in Abhängigkeit von der erforderlichen Verstellung betätigt wird. Nachteilig bei dieser Lösung ist, dass zur Erzielung der erforderlichen Kräfte ein relativ großer Hydraulikkolben erforderlich ist, was einen großen baulichen Aufwand darstellt. Außerdem ist der Ölverbrauch durch die Betätigung des Kolbens relativ groß, was eine Belastung des Motors durch eine entsprechende Ölpumpe darstellt. Darüber hinaus kann bei einer solchen bekannten Vorrichtung die Nockenwelle nur zwischen zwei Endstellungen hin- und hergeschaltet werden.

Weiters ist aus der DE 4101676 A1 eine elektrische Verstellvorrichtung bekannt, bei der ein Elektromotor vorgesehen ist, der über eine Gewindespindel das Verstellelement verschiebt. Da sich jedoch das Verstellelement im wesentlichen mit Nockenwellendrehzahl dreht, muss zwischen dem Elektromotor und dem Verstellelement ein Axialdrucklager vorgesehen sein, das die Relativbewegung zwischen dem verdrehfesten und dem sich drehenden Bauteil aufnimmt.

Dieses Axialdrucklager ist bei der bekannten Lösung praktisch während des gesamten Motorbetriebs belastet, da durch die zwischen Antriebsrad und Nockenwelle wirkenden Torsionsmomente stets eine in Axialrichtung wirkende Kraft auf das Verstellelement ausgeübt wird. Dieses Axialdrucklager ist daher ein kritischer Bauteil, der die Lebensdauer des Motors einschränkt. Eine ähnliche Lösung ist in der DE 33 20 835 A1 beschrieben, wobei die gleichen Nachteile auftreten.

Die DE 36 07 256 A beschreibt eine Vorrichtung, bei der ein Schrittmotor zur Verstellung der Nockenwelle vorgesehen ist, der einerseits mit der Nockenwelle und andererseits mit dem Antriebsrad verbunden ist. Da dieser Schrittmotor das gesamte Antriebsmoment der Nockenwelle aufnehmen muss, ist eine solche Lösung mit vernünftigem Aufwand nicht realisierbar.

Diesen Nachteil vermeidet die aus der DE 41 10 195 bekannte Verstellvorrichtung für zwei in drehender Antriebsverbindung stehende Baugruppen, bei der ein Elektromotor mit feststehendem Stator einen Planetenträger antreibt, der ein Paar von konzentrischen Planetenrädern trägt. Ein solcher feststehender Elektromotor muss jedoch im Betrieb ständig mitlaufen, die Verstellung der beiden Baugruppen gegeneinander erfolgt durch schnelleres oder langsameres Laufen. Die Regelung einer solchen Vorrichtung ist aufwendig.

Ferner zeigt die EP 0 596 860 A eine Vorrichtung zur Verstellung der Ventilöffnungszeiten, bei der die Nockenwelle hohl ausgeführt ist, und eine Innenwelle enthält. Die Nocken sind zweiteilig ausgeführt, wobei die einzelnen Nockenabschnitte um einen bestimmten Winkel gegeneinander verdreht werden können. Die Verdrehung der beiden Nockenabschnitte erfolgt durch einen sich mitdrehenden Elektromotor, der über Schleifringe versorgt wird. Ähnliche Lösungen sind in der US 5, 417, 186 A und der US 4, 770, 060 A offenbart.

Ebenso zeigt ein älterer Vorschlag der Anmelderin, veröffentlicht in der EP-A 0 903 471, eine Nockenwellenverstelleinrichtung mit einem Planetengetriebe, bei der die Verstellung durch einen Elektromotor erfolgt, der über Schleifkontakte mit Strom versorgt wird.

Die elektromotorische Verstellung einer Nockenwelle hat sich in der Praxis als vorteilhafte Lösung herausgestellt. Die Versorgung der Elektromotoren über Schleifkontakte stellt jedoch einen gewissen Schwachpunkt solcher Vorrichtungen dar.

Aufgabe der vorliegenden Erfindung ist es, diese Nachteile zu vermeiden und eine Vorrichtung der oben beschriebenen Art so weiterzubilden, dass Schleifringe, Schleifkontakte u. dgl., vermieden werden können.

Erfindungsgemäß ist vorgesehen, dass mit einem der Rotoren eine erste Spulenanordnung verdrehfest verbunden ist, die mit einer feststehenden Spulenanordnung in elektromagnetischer Wechselwirkung steht, um die für den Betrieb des Elektromotors erforderliche Energie zu induzieren oder zu übertragen.

Wesentlich an der Erfindung ist, dass der Elektromotor, der die Verstellung der Nockenwelle bewirkt, berührungslos durch eine Spulenanordnung angesteuert wird. Die Energie kann dabei entweder in der Art eines Transformators über einen Luftspalt übertragen werden oder in der Art eines Generators induziert werden. Da es sich bei dem Elektromotor um einen rotierenden Bauteil handelt, wird in der vorliegenden Beschreibung nicht zwischen Stator und Rotor des Elektromotors unterschieden, wie dies allgemein üblich ist, sondern es wird von zwei Rotoren gesprochen. Einer der Rotoren ist grundsätzlich mit der Nockenwelle verbunden, während der andere Rotor mit dem Antriebsrad verbunden ist, das als Kettenrad oder als Riemenscheibe zur Aufnahme eines Zahnriemens ausgebildet sein kann. Da das erforderliche Drehmoment zur Verstellung der Nockenwelle relativ groß ist und andererseits der Verstellwinkel relativ klein ist, ist es im allgemeinen erforderlich, ein Getriebe vorzusehen, das eine Relativbewegung der beiden Rotoren von einigen Umdrehungen in eine Verdrehung der Nockenwelle in Bezug auf das Antriebsrad von etwa 15° bis 20° umwandelt.

Eine besonders bevorzugte Ausführungsvariante der vorliegenden Erfindung sieht vor, dass das Getriebe aus einem starren, kreisförmigen Hohlrad und einem flexiblen außen verzahnten Zahnrad besteht, das auf einem Wälzlager mit elliptischem Innenring angeordnet ist und das mit dem Hohlrad in Eingriff steht. Ein solches Getriebe wird allgemein als Harmonic-Drive-Getriebe bezeichnet. Wie bereits oben beschrieben, ist ein relativ großes Übersetzungsverhältnis zwischen dem Elektromotor und dem von ihm angetriebenen Bauteil erforderlich, was durch ein solches Getriebe erreicht werden kann. Beträgt beispielsweise die Anzahl der Zähne des Hohlrades 100 und die Anzahl der Zähne des elliptischen Zahnrades 98, so ergibt sich ein Übersetzungsverhältnis von etwa 1:50. Da dies durch ein einstufiges Getriebe ohne Verwendung von Planetenrädern od. dgl. erzielt wird, kann auf diese Weise die erfindungsgemäße Vorrichtung äußerst kompakt ausgeführt werden.

Eine besonders günstige Lösung ist in diesem Zusammenhang dann gegeben, wenn ein Rotor mit dem elliptischen Innenring des Wälzlagers direkt verbunden ist. Weiters ist es vorteilhaft, wenn das innen verzahnte Zahnrad fest mit einem Rotor verbunden ist. Durch diese Maßnahmen kann ein einfacher und kompakter Aufbau erreicht werden.

Nachteilig ist bei herkömmlichen Harmonic-Drive-Getrieben, dass aufgrund der relativ feinen Verzahnung die Belastbarkeit beschränkt ist. Insbesondere sind solche Getriebe gegenüber stoßartigen Belastungen empfindlich. Um diesen Nachteil zu vermeiden, kann das Getriebe aus folgenden Bauteilen aufgebaut sein: einer ersten Eingriffsfläche, die am inneren Umfang eines ersten Eingriffsteils angeordnet ist, einer zweiten Eingriffsfläche, die am äußeren Umfang eines flexiblen Eingriffsteils angeordnet ist und mit der ersten Eingriffsfläche in Eingriff steht, und einem zum ersten Eingriffsteil und zum flexiblen Eingriffsteil koaxialen Treibteil, an dem ein Wälzlager mit einem unrund ausgebildeten Innenring angeordnet ist, das einen flexiblen Außenring aufweist, der mit dem flexiblen Eingriffsteil verbunden ist und diesen an vorzugsweise zwei Stellen gegen den ersten Eingriffsteil drückt, wobei die erste Eingriffsfläche des ersten Eingriffsteils mit der zweiten Eingriffsfläche des flexiblen Eingriffsteils in einer reibschlüssigen Verbindung steht.

Bei einem solchen Getriebe ist zwar die eindeutige phasenmäßige Zuordnung der einzelnen Komponenten und das genaue Übersetzungsverhältnis eines Zahnradgetriebes nicht mehr gegeben, aber es kann dafür eine Unempfindlichkeit gegen Überbelastung erreicht werden, die bei einem Zahnradgetriebe nicht gegeben ist. Weiters ist das erfindungsgemäße Getriebe unempfindlich gegenüber Schmutz und anspruchslos in bezug auf Schmierung.

Ein weiterer Vorteil der Erfindung besteht darin, dass die Exzentrizität des Wave Generators deutlich geringer ausgeführt werden kann als bei einem herkömmlichen Getriebe mit Verzahnungen. Dabei ist es nämlich erforderlich, die Exzentrizität so groß zu machen, dass die Zähne der ersten und der zweiten Eingriffsfläche außerhalb der Eingriffsbereiche nicht miteinander in Konflikt kommen. Bei der erfindungsgemäßen Lösung ist die Exzentrizität nur durch den geringen Weg bestimmt, der erforderlich ist, die reibschlüssige Verbindung herzustellen. Daher ist die Verformung des flexiblen Eingriffsteils im Betrieb deutlich geringer, was die Verluste verringert und die Standzeit erhöht.

Grundsätzlich ist es möglich, dass die erste und die zweite Eingriffsfläche an einer, an zwei oder an drei oder mehr Stellen in Eingriff stehen. Als besonders günstig hat es sich jedoch herausgestellt, wenn zwei gegenüberliegende Eingriffspunkte vorgesehen sind. Bei einer solchen Lösung ist der Innenring des Wälzlagers im Querschnitt im wesentlichen elliptisch ausgebildet.

Eine sichere Kraftübertragung kann insbesondere dadurch erreicht werden, wenn die erste Eingriffsfläche kegelförmig mit kleinem Öffnungswinkel ausgebildet ist.

Auf diese Weise kann auch ein allfälliger Verschleiß ausgeglichen werden. Besonders günstig ist es in diesem Zusammenhang, wenn der Öffnungswinkel zwischen 1° und 10°, vorzugsweise zwischen 2° und 6° beträgt. Der Wave Generator wird in diesem Fall vorzugsweise so ausgeführt, dass der Außenring des Wälzlagers kegelförmig mit kleinem Öffnungswinkel ausgebildet ist. Dabei sollte der Öffnungswinkel des Außenrings im wesentlichen dem der ersten Eingriffsfläche entsprechen.

Besonders vorteilhaft ist es, wenn ein Anpressmittel vorgesehen ist, das die erste Eingriffsfläche in Axialrichtung auf die zweite Eingriffsfläche drückt. Dadurch kann eine selbständige Einstellung der Anpresskraft und damit des übertragbaren Moments erreicht werden. Vorzugsweise weist das Anpressmittel eine Feder auf, die den ersten Eingriffsteil und den flexiblen Eingriffsteil in Axialrichtung gegeneinander vorspannt.

In einer besonders bevorzugten Ausführungsvariante der Erfindung ist vorgesehen, dass ein Rotor des Elektromotors als im wesentlichen rohrförmige Hülse ausgebildet ist, die an ihrem inneren Umfang eine Wicklung trägt, die mit einer Wicklung oder einem Permanentmagneten am anderen Rotor in elektromagnetischer Wechselwirkung steht, und dass die Hülse an ihrem äußeren Umfang eine Spulenanordnung aufweist, die mit einer feststehenden Spulenanordnung zusammenwirkt. Auf diese Weise wird eine besonders einfache Lagerung der beweglichen Bauteile ermöglicht. Beispielsweise kann der innere Rotor Permanentmagnete tragen, die mit Wicklungen in Wechselwirkung stehen, die am inneren Umfang des äußeren Rotors angeordnet sind. Durch Anlegen eines Wechselstroms entsprechender Frequenz an den äußeren Rotor kann der Elektromotor in der Art einer Synchronmaschine betrieben werden. Theoretisch ist es auch möglich, den inneren Rotor als Käfigläufer auszubilden, und den Elektromotor als Asynchronmotor zu betreiben. Diese Varianten besitzen den Vorteil, dass der innere Rotor nicht mit Energie von außen versorgt werden muss. Eine erhöhte Leistung kann jedoch dadurch erreicht werden, dass auch der innere Rotor elektromagnetisch angeregt wird.

Vorzugsweise ist vorgesehen, dass die Spulenanordnungen jeweils aus mindestens einer Wicklung bestehen, die im wesentlichen in Umfangsrichtung angeordnet ist. Auf diese Weise wird erreicht, dass der durch die Spulenanordnung übertragene elektrische Strom unabhängig von der Drehzahl der Nockenwelle ist.

Dies ist insofern wichtig, als die Übertragung durch die Spulenanordnung nicht nur die Leistung für den Betrieb des Elektromotors zur Verfügung stellt, sondern auch die Steuerungsinformationen beinhaltet.

Besonders günstig ist es dabei, wenn die Hülse fest mit dem Antriebsrad verbunden ist. Die feste Verbindung soll auch den Fall umfassen, bei dem die Hülse mit dem Antriebsrad einstückig ausgebildet ist.

Durch die vorzugsweise Ausbildung des inneren Rotors als rohrförmige Hülse kann der Aufbau der Vorrichtung und insbesondere die Montage, wesentlich erleichtert werden, da die gesamte Verstellvorrichtung im wesentlichen mit einer einzigen Schraube an der Nockenwelle befestigt werden kann.

In einer weiteren Ausführungsvariante der vorliegenden Erfindung ist vorgesehen, dass ein Rotor mit dem anderen Rotor über ein Flachbandkabel verbunden ist, um elektrische Energie zur Ansteuerung eines Rotors zu übertragen. Bei dieser Lösung wird von der Tatsache Gebrauch gemacht, dass sich die beiden Rotoren nur wenige Umdrehungen gegeneinander bewegen. Bei dieser Lösung wird ein Rotor über eine Spulenanordnung mit Energie versorgt. Der andere Rotor steht mit dem ersten Rotor über das Flachbandkabel in Verbindung. Besonders günstig ist es in diesem Zusammenhang, wenn an einem Rotor ein elektronisches Steuergerät vorgesehen ist, um Steuersignale auszuwerten, die über das Flachbandkabel übertragen werden. Auf diese Weise kann durch das Steuergerät der Strom zur Versorgung eines Rotors, beispielsweise in seiner Frequenz, verändert werden. So ist es möglich, beispielsweise die Funktion eines Schrittmotors nachzubilden.

In einer alternativen Ausführungsvariante der Erfindung ist vorgesehen, dass jeder der beiden Rotoren mit einer unabhängigen Spulenanordnung ausgestattet ist, von denen jede mit einer entsprechenden feststehenden Spulenanordnung in Wirkverbindung steht. Durch die unabhängige Ansteuerung kann in einfacher Weise ebenfalls eine unabhängige Ansteuerung von Wicklungen beider Rotoren erreicht werden.

Weiters ist es vorteilhaft, wenn die erste Spulenanordnung und die feststehende Spulenanordnung als Drehstromgenerator ausgebildet sind. So kann die Erzeugung der elektrischen Energie in besonders einfacher und zuverlässiger Weise erfolgen. Die Stromerzeugung in diesem Generator hängt von dem Erregerstrom ab, wodurch in einfacher Weise der Motor gesteuert werden kann. Gegebenenfalls kann eine zweite Erregerwicklung vorgesehen sein, die eine Bremswirkung auf den Rotor ausübt, um auch eine Rückwärtsverstellung schnell und sicher zu bewirken. Alternativ dazu kann der vom Generator erzeugte Strom in einer entsprechenden Schaltung phasenverschoben werden, bevor er dem Elektromotor zugeführt wird, was ebenfalls eine Bewegungsumkehr ermöglicht.

Ferner wird ein kompakter Aufbau und ein besonders schnelles Ansprechverhalten auch bei niedrigen Drehzahlen erreicht, wenn die feststehende Spulenanordnung eine Polzahl besitzt, die größer ist als die der Rotoren des Elektromotors. Dadurch kann der Schlupf des Käfigläufers in wirksamer Weise ausgeglichen werden.

Eine bevorzugte Ausführungsvariante der Erfindung sieht vor, dass das Antriebsrad über einen reibschlüssigen Antrieb mit der Kurbelwelle in Verbindung steht.

Ein reibschlüssiger Antrieb, beispielsweise durch einen Keilrippenriemen, besitzt den Vorteil einer erheblichen Kosteneinsparung. Es geht jedoch dadurch die eindeutige Phasenbeziehung des Antriebsrades zur Kurbelwelle der Brennkraftmaschine verloren. Dies kann durch die erfindungsgemäße Verstelleinrichtung, die eine unbegrenzte Verstellmöglichkeit bietet, ausgeglichen werden.

In der Folge wird die vorliegende Erfindung anhand der in den Figuren dargestellten Ausführungsbeispielen näher erläutert. Es zeigen:

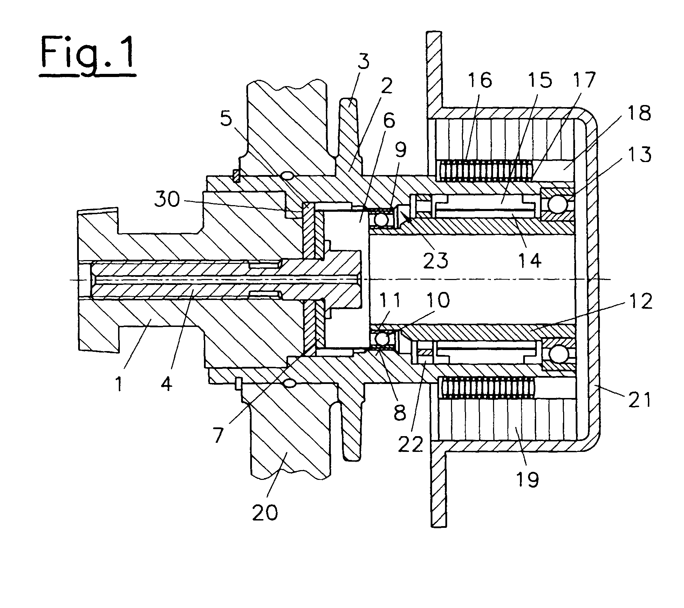

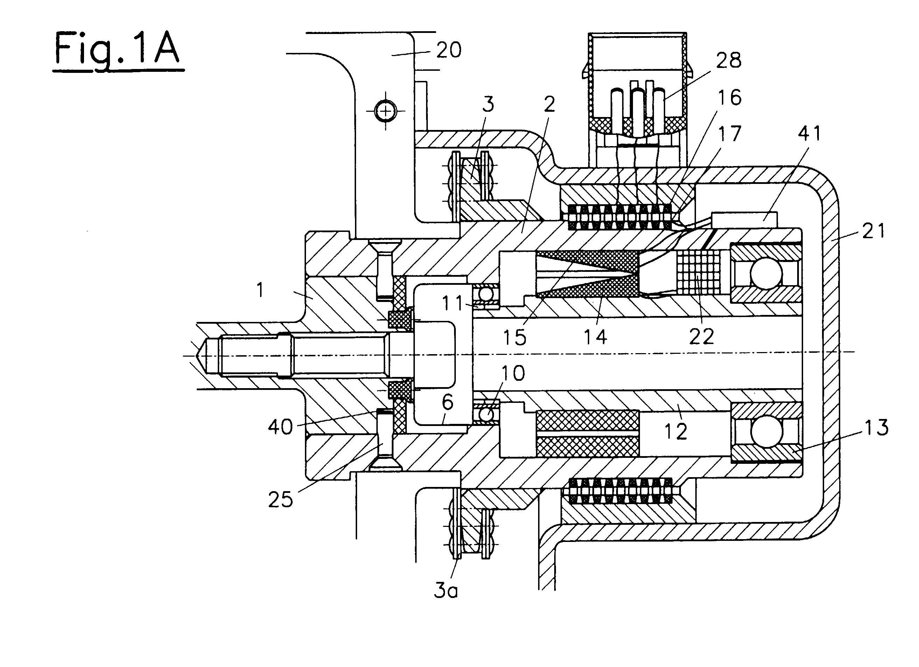

Fig. 1                      einen Längsschnitt durch eine erste Ausführungsvariante der Erfindung;

| Fig. 1A | eine gegenüber der Fig. 1 geringfügig abgeänderte Ausführungsvariante; |
| Fig. 2 | eine Explosionsdarstellung eines allgemeinen Harmonic-Drive-Getriebes; |
| Fig. 3A, B, C und D | Darstellungen zur Erklärung der Wirkungsweise eines Harmonic-Drive-Getriebes; |
| Fig. 4 bis 8 | weitere Ausführungsvarianten der Erfindung im Längsschnitt bzw. in teilweise aufgerissenen axonometrischen Darstellungen; |
| Fig. 9, 10, 11 und 11A | Details einer weiteren Ausführungsvariante der Erfindung. |

Die Vorrichtung von Fig. 1 besteht aus einer Nockenwelle 1 und einer relativ zur Nockenwelle 1 verdrehbaren Hülse 2, an der ein Kettenrad 3 einstückig angeformt ist. Über eine Schraube 4 und eine Scheibe 5 ist mit der Nokkenwelle 1 ein Zahnrad 6 verbunden, das als dünnwandiger Zylinder ausgebildet ist, der an einem Ende durch eine starre Scheibe 7 abgeschlossen ist. Die Schraube 4 sichert die Scheibe 7 des Zahnrades 6 verdrehfest gegenüber der Scheibe 5 und der Nockenwelle 1. Die Hülse 2 ist im Bereich 8 als kreisförmiges, innenverzahntes Zahnrad ausgebildet, das mit dem Zahnrad 6 in Eingriff steht. An seiner Innenseite stützt sich das Zahnrad 6 am Außenring 9 eines Wälzlagers 10 ab, das als Kugellager ausgebildet ist. Der Innenring 11 des Wälzlagers 10 ist elliptisch ausgebildet, so dass das Zahnrad 6 mit dem innenverzahnten Bereich 8 der Hülse 2 nur an zwei in Umfangsrichtung gegenüberliegenden Stellen in Eingriff steht. Die Zähnezahl des Zahnrades 6 ist um zwei kleiner als die Zähnezahl des innenverzahnten Bereiches 8, der ein Hohlrad bildet. Der Innenring 11 des Wälzlagers 10 ist fest im einem inneren Rotor 12 verbunden, der im wesentlichen rohrförmig ausgebildet ist. Am gegenüberliegenden Ende ist der Rotor 12 über ein Kugellager 13 an der Hülse 2 gelagert. Der innere Rotor 12 trägt an seinem äußeren Umfang eine Wicklung 14, die mit einer Wicklung 15 in Wechselwirkung steht, die am inneren Umfang der Hülse 2 ausgebildet ist, die den äußeren Rotor bildet.

Die Wicklungen 14 und 15 sind weiters durch ein Flachbandkabel 22 verbunden, das elektrische Energie von der Hülse 2 auf den inneren Rotor 12 überträgt. Das Flachbandkabel 22 besitzt eine ausreichende Länge, um den möglichen Verdrehbereich der Rotoren 2, 12 gegeneinander zu überbrücken. Ein in der Fig. 1 nicht dargestelltes elektronisches Steuergerät kann vorgesehen sein, um beispielsweise die Frequenz des Stromes, der zu der Wicklung 14 übertragen wird, zu verändern, um die Drehzahl des inneren Rotors 12 in Bezug auf die Hülse 2 entsprechend zu verändern.

Die elektrische Energie zur Ansteuerung der Wicklungen 14 und 15 wird durch eine feststehende Spulenanordnung 16 erzielt, die mit einer auf der Hülse 2 angebrachten Spulenanordnung 17 zusammenwirkt. Um die Übertragung des Stroms über den Luftspalt 18 unabhängig von der Drehzahl der Hülse 2 zu gestalten, sind die Spulenanordnungen in Umfangsrichtung gewickelt. Bleche 19 dienen zur Verstärkung des elektromagnetischen Feldes.

Die Hülse 2 ist drehbar gegenüber dem nur angedeuteten Gehäuse 20 gelagert, und die gesamte Vorrichtung ist durch einen Deckel 21 abgeschlossen. Durch die rohrförmige Ausbildung des Rotors 12 kann die gesamte Vorrichtung mit Ausnahme des Deckels 21 allein durch das Eindrehen der Schraube 4 an der Nockenwelle 1 befestigt werden.

In der Folge wird der Betrieb der erfindungsgemäßen Vorrichtung näher beschrieben. Wenn der Verstellwinkel der Nockenwelle 1 nicht zu verändern ist, ist an sich aufgrund der Selbsthemmung des Getriebes 23 bestehend aus den Rädern 6, 8 keine Ansteuerung des Elektromotors notwendig. Zur Sicherung der Stellung kann jedoch über die Spulenanordnungen 16, 17 ein Strom übertragen werden, der die Wicklungen 14, 15 in einer stabilen Lage zueinander hält. In diesem Fall drehen sich Antriebsrad 3 und Nockenwelle 1 mit der gleichen Drehzahl. Wenn der Phasenwinkel der Nockenwelle 1 zu verstellen ist, wird über eine nicht dargestellte Motorsteuerung eine entsprechende Spannung an die Spulenanordnung 16 angelegt, die auf die Spulenanordnung 17 an der Hülse 2 übertragen wird. Der dort induzierte Strom versorgt die Wicklung 15 an der Hülse 2 und über das Flachbandkabel 22 und das Steuergerät die Wicklung 14 am inneren Rotor 12. Im einfachsten Fall kann das Steuergerät als Gleichrichterschaltung ausgebildet sein, der die Wicklungen 14 mit einem konstanten Gleichstrom versorgt, so dass die magnetische Polarität am Umfang des äußeren Rotors 12 unabhängig von der Frequenz des Wechselstroms ist, der über die Spulenanordnungen 16, 17 übertragen wird. An der äußeren Wicklung 15 liegt jedoch ein Wechselstrom an, der ein elektromagnetisches Drehfeld erzeugt, das eine Verdrehung des inneren Rotors 12 gegenüber der Hülse 2 bewirkt. Da die Zähnezahl des Zahnrades 6 um zwei geringer ist als die des Hohlrades 8, bewirkt eine vollständige Umdrehung des inneren Rotors 12 eine Verdrehung der Nockenwelle 1 gegenüber der Hülse 2 im Ausmaß von zwei Zähnen. Daher ist das Moment, das am Elektromotor aufgebracht werden muss, nur ein geringer Bruchteil des tatsächlich erforderlichen Verstellmoments.

Die Ausführungsvariante von Fig. 1A entspricht weitgehend der von Fig. 1. Die analogen Teile sind mit gleichen Bezugszeichen bezeichnet und in der Folge nicht erneut beschrieben. Bei dieser Ausführungsvariante sind in der Hülse 2 in Radialrichtung Schrauben 25 eingeschraubt, die in kreisringsektorförmige Ausnehmungen 40 der Nockenwelle 1 eingreifen. Auf diese Weise wird der zulässige Verdrehwinkel der Nockenwelle 1 definiert. Ein weiterer Unterschied dieser Ausführungsvariante gegenüber der zuvor beschriebenen Ausführungsvariante besteht darin, dass der Deckel 21 über das Kettenrad 3 gezogen ist und direkt am Gehäuse 20 befestigt ist. Die Antriebskette 3a ist in der Fig. 1A dargestellt. Weiters ist in der Fig. 1A das Steuergerät 41 ersichtlich, das von der Spulenanordnung 17 versorgt wird. Über das Steuergerät 41 wird auf direktem Wege die Wicklung 15 an der Hülse 2 angesteuert, während die Wicklung 14 am Rotor 12 über das Flachbandkabel 22 versorgt wird. Das Steuergerät 41 kann bei dieser Ausführungsvariante so ausgebildet sein, dass die durch Pulsweitenmodulation übertragenen Steuerimpulse zusammen mit der eigentlichen Antriebsenergie zur Erzeugung von zwei Wechselströmen verwendet wird, um die Wicklungen 14 und 15 anzusteuern. Bei gleicher Frequenz erfolgt dabei keine Verdrehung und der Verstellwinkel der Nockenwelle 1 bleibt gleich. Eine vor- bzw. nacheilende Bewegung der Nockenwelle 1 kann durch einen entsprechenden Frequenzunterschied hervorgerufen werden. Ein nicht dargestellter Hallsensor od. dgl. ermöglicht es, eine Information über den jeweiligen aktuellen Verstellwinkel der Nockenwelle 1 zu erhalten. Die Stromversorgung erfolgt über Anschlüsse 28, die mit der Spulenanordnung 16 in Verbindung stehen.

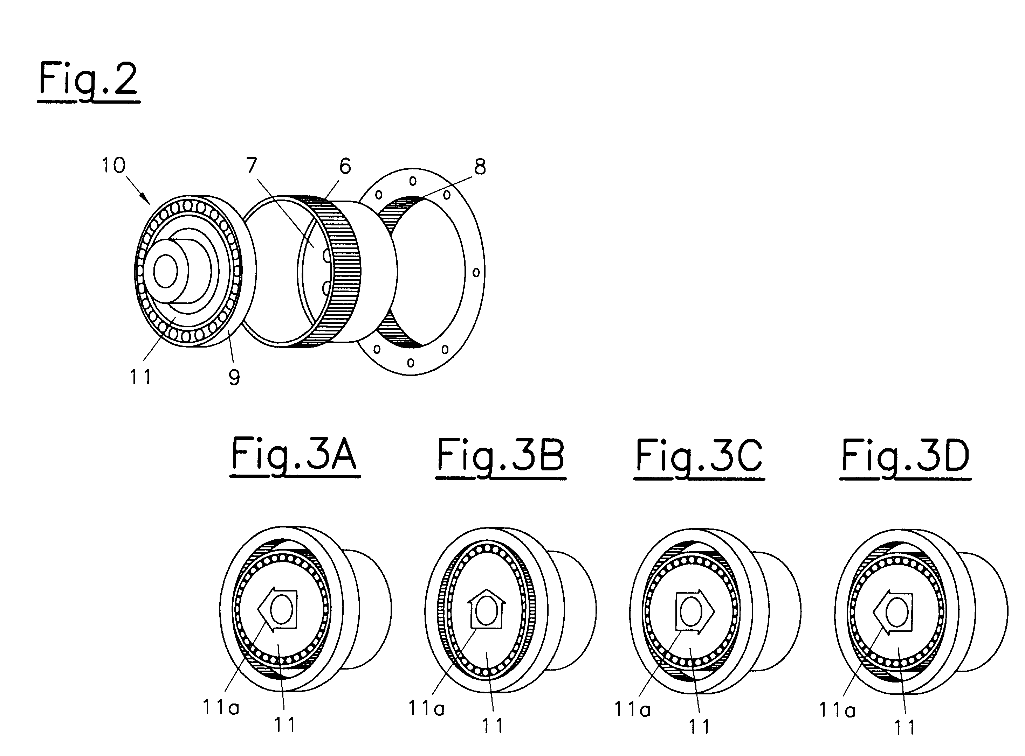

In der Fig. 2 ist in einer axonometrischen Explosionsdarstellung das Harmonic-Drive-Getriebe detailliert dargestellt. Der Innenring 11 des Wälzlagers 10 ist elliptisch mit geringfügiger Exzentrizität. Der Außenring 9 stützt sich direkt an der Innenseite eines flexiblen Zahnrades 6 ab. Dieses Zahnrad 6 steht an zwei gegenüberliegenden Punkten mit einem starren, innenverzahnten Zahnrad 8 in Eingriff, das kreisförmig ausgebildet ist.

In den Fig. 3A, B, C und D ist die Funktionsweise dieses Harmonic-Drive-Getriebes dargestellt. Der Innenring 11 ist in der Stellung der Fig. 3B gegenüber der Stellung in der Fig. 3A um 90° in Richtung des Uhrzeigersinns verdreht. Die Fig. 3C zeigt eine weitere Drehung um 90° und die Fig. 3D eine Drehung um insgesamt 360°. Zur Erleichterung der Übersicht ist in den Fig. 3A, B, C und D eine pfeilförmige Markierung 11a angebracht. Die Zähnezahl des flexiblen Zahnrades 6 ist um zwei geringer, als die Zähnezahl des innenverzahnten Zahnrades 8. Daher ergibt sich ein geringfügiger Unterschied der Winkelgeschwindigkeit des Zahnrades 6 gegenüber dem Zahnrad 8. Aus den Fig. ist ersichtlich, dass sich die Markierung 6a, die gedanklich mit dem Zahnrad 6 verbunden ist, im Zuge der Drehbewegung des Innenrings 11 langsam in Gegenuhrzeigerrichtung bewegt. Insgesamt entspricht der Verdrehwinkel dem Zentriwinkel von zwei Zähnen des Zahnrads 6.

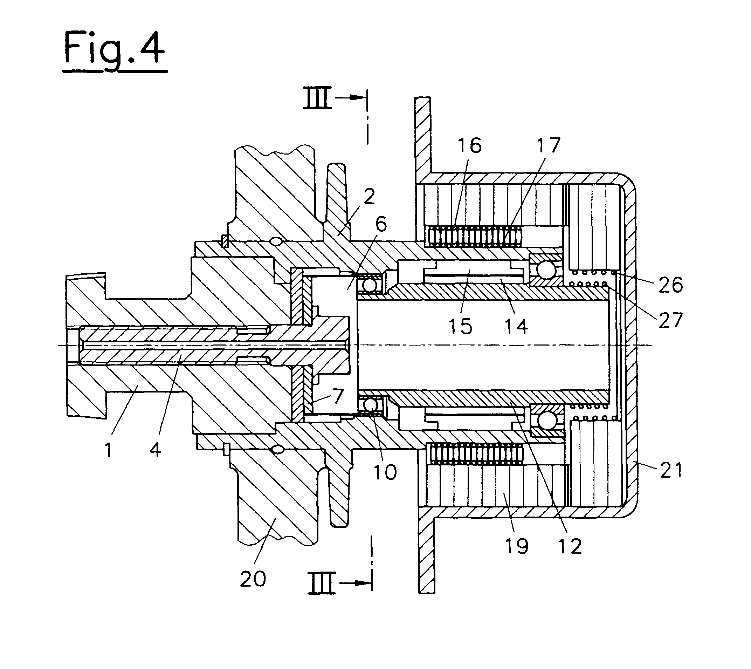

Die Ausführungsvariante von Fig. 4 unterscheidet sich von der Ausführungsvariante von Fig. 1 nur dadurch, dass die Wicklung 14 des inneren Rotors 12 über eine getrennte Spulenanordnung 27 versorgt wird, die mit einer weiteren feststehenden Spulenanordnung 26 in Wechselwirkung steht, Auf diese Weise können Stromstärke, Frequenz und Phasenlage der Ströme in den Wicklungen 14 und 15 völlig unabhängig voneinander eingestellt werden. Dies ermöglicht besondere Freiheitsgrade bei der Gestaltung der Steuerung.

Es wird angemerkt, dass in Fällen, bei denen das Verstellmoment gering ist, am inneren Rotor 12 auch Permanentmagnete angebracht sein können, die mit einer Wicklung 15 an der Hülse 2 zusammenwirken. Auf diese Weise kann mit einem einzigen Paar von Spulenanordnungen, die die Wicklung 15 an der Hülse 2 versorgen, das Auslangen gefunden werden, ohne ein Flachbandkabel, wie bei der Ausführungsvariante von Fig. 1 oder eine weitere Spulenanordnung, wie bei der Ausführungsvariante von Fig. 2 vorsehen zu müssen.

Um einen Notlaufbetrieb auch bei Ausfall der Verstellvorrichtung gewährleisten zu können, ist in der Hülse 2 ein Vorsprung 30 vorgesehen, der in eine Umfangsnut der Nockenwelle 1 eingreift, so dass eine Verstellung nur in einem zulässigen Bereich möglich ist.

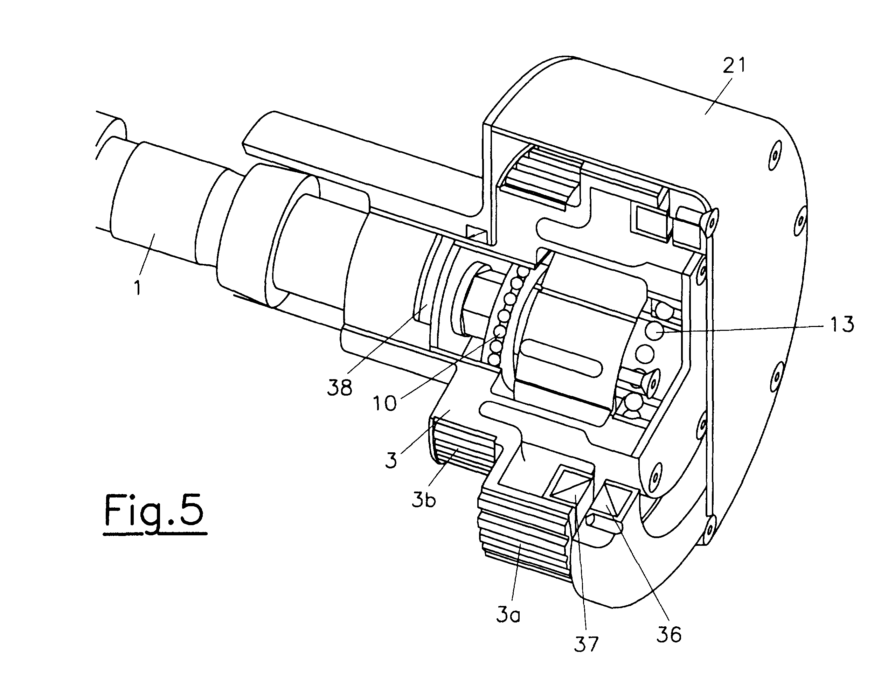

Bei der Ausführungsvariante von Fig. 5 sind die Spulenanordnungen 36, 37 so angeordnet, dass ihre Stirnseiten zusammenwirken. Das Antriebsrad 3 ist als Zahnriemenscheibe ausgebildet, die zwei Laufflächen 3a und 3b aufweist, von denen eine zur Aufnahme eines nicht dargestellten Zahnriemens zu ihrem Antrieb über die Kurbelwelle vorgesehen ist, während die andere zum Antrieb einer weiteren nicht dargestellten Nockenwelle vorgesehen ist. Weiters ist eine kreisringsektorförmige Ausnehmung 38 in der Nockenwelle 1 vorgesehen, in die ein entsprechender Vorsprung eingreift, der mit dem Antriebsrad 3 in Verbindung ist, um eine Beschränkung der Drehbewegung zu bewirken. Der übrige Aufbau der Vorrichtung ist analog der zuvor beschriebenen Ausführungsvariante.

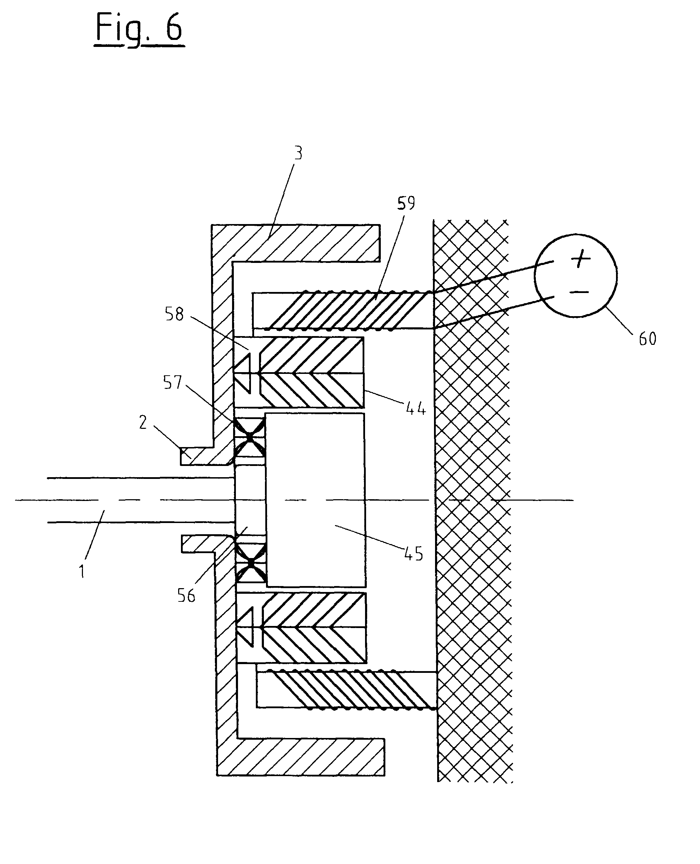

Die Fig. 6 zeigt schematisch eine weitere Ausführungsvariante der Erfindung. Mit der relativ zur Nockenwelle 1 verdrehbaren Hülse 2, an der ein Antriebsrad 3 einstückig angeformt ist, ist eine Motorwicklung 44 fest verbunden, so dass die Hülse 2 den Rotor eines Elektromotors bildet. Ein weiterer Rotor dieses Elektromotors wird durch einen Kurzschlussläufer 45 gebildet, der über ein Harmonic-Drive-Getriebe 56, das in der Fig. 1 nur schematisch angedeutet ist, mit der Nockenwelle 1 in Verbindung steht. Das Harmonic-Drive-Getriebe 56 kann eine Ausführung aufweisen, wie sie in den Fig. 2 und Fig. 3A, 3B, 3C und 3D gezeigt ist oder auch als Reibradgetriebe von grundsätzlich gleichem Aufbau ausgebildet sein. Das Harmonic-Drive-Getriebe 56 besitzt ein großes Übersetzungsverhältnis von beispielsweise 50:1, so dass der Elektromotor nur ein Fünfzigstel des Verstellmomentes der Nockenwelle 1 aufbringen muss. Um die Haltekraft im stationären Zustand praktisch auf null zu beschränken, ist ein Doppelfreilauf 57 zwischen dem Kurzschlussläufer 45 und der Hülse 2 vorgesehen, der bewirkt, dass das Antriebsmoment der Nockenwelle 1 kein Moment auf den Elektromotor ausübt, so dass im stationären Zustand der Elektromotor überhaupt kein Moment aufbringen muss. Weiters ist fest mit dem Rotor eine erste Spulenanordnung 58, die als Generatorwicklung ausgebildet ist, verbunden, die weiters elektrisch mit der Motorwicklung 44 in Verbindung steht. Durch eine feststehende Spulenanordnung 59 wird in der Spulenanordnung 58 ein Strom induziert, der zur Bewegung des Kurzschlussläufers 45 gegenüber der Motorwicklung 44 dient. Über die Stromversorgung 60 der feststehenden Spulenanordnung 59 kann die Drehzahl des Kurzschlussläufers 45 in Bezug auf die Motorwicklung 44 gesteuert werden.

Da an den Anschluss 60 nur ein Erregerstrom übertragen werden muss, wird das Bordnetz des betreffenden Kraftfahrzeugs durch die Verstellvorrichtung praktisch nicht belastet. Wenn die erste Spulenanordnung 58 beispielsweise zwölfpolig oder achtzehnpolig ausgebildet ist und die Motorwicklung 44 sechspolig ausgebildet ist, wird ein elektrisches Übersetzungsverhältnis geschaffen, durch das auch bei geringen Drehzahlen eine schnelle Verstellbewegung der Nockenwelle sichergestellt ist.

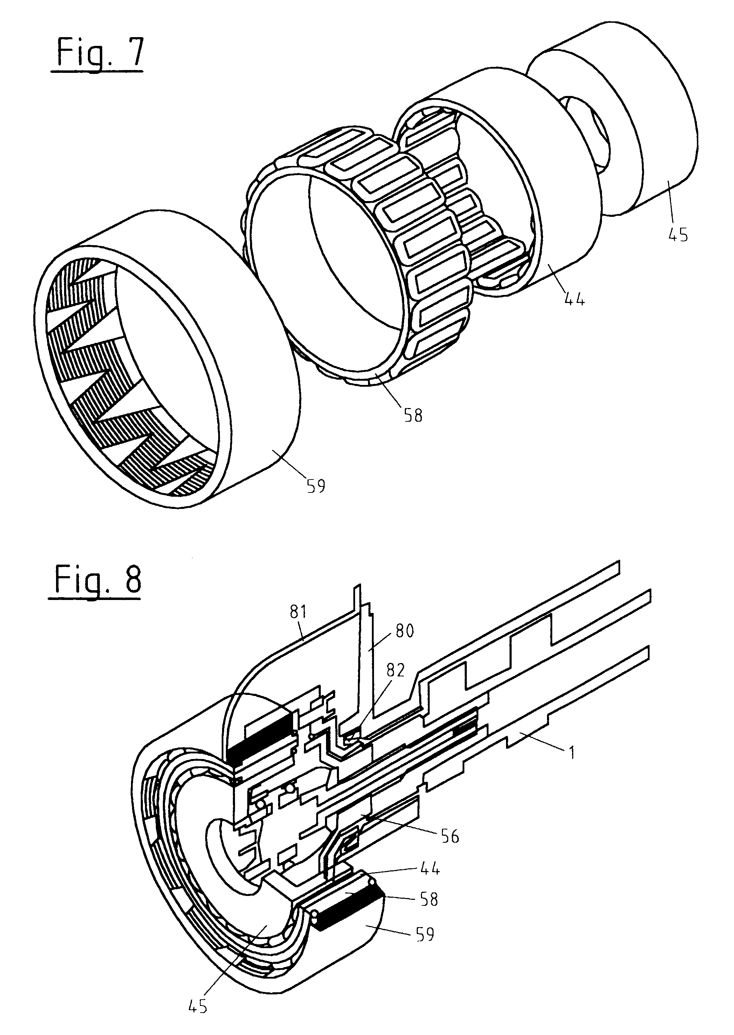

In der Fig. 7 sind die feststehende Spulenanordnung 59, die die Erregerwicklung darstellt, die erste Spulenanordnung 58, die die Generatorwicklung darstellt, die Motorwicklung 4, die mit der ersten Spulenanordnung 58 mechanisch und elektrisch verbunden ist, und der Kurzschlussläufer 45 dargestellt. Bei der dargestellten Ausführungsvariante sind die einzelnen Bauteile radial ineinander angeordnet. Es kann jedoch auch eine andere geometrische Konfiguration, wie etwa eine axiale Anordnung mit einem Scheibenläufer oder eine Anordnung mit dem Elektromotor außerhalb des Generators gewählt werden, wenn es die baulichen Umstände erfordern. Gleichfalls kann der Kurzschlussläufer 45 auch konisch ausgeführt sein, um das Drehmomentverhalten zu optimieren.

In der Fig. 8 ist schematisch dargestellt, wie die erfindungsgemäße Vorrichtung eingebaut ist. Ein Gehäuse 70 deckt die Nockenwelle 1 ab, ein Deckel 71 nimmt die feststehende Spulenanordnung 59 auf. Ein Wellendichtring 82 dichtet die Verstelleinrichtung gegenüber dem Zylinderkopf ab.

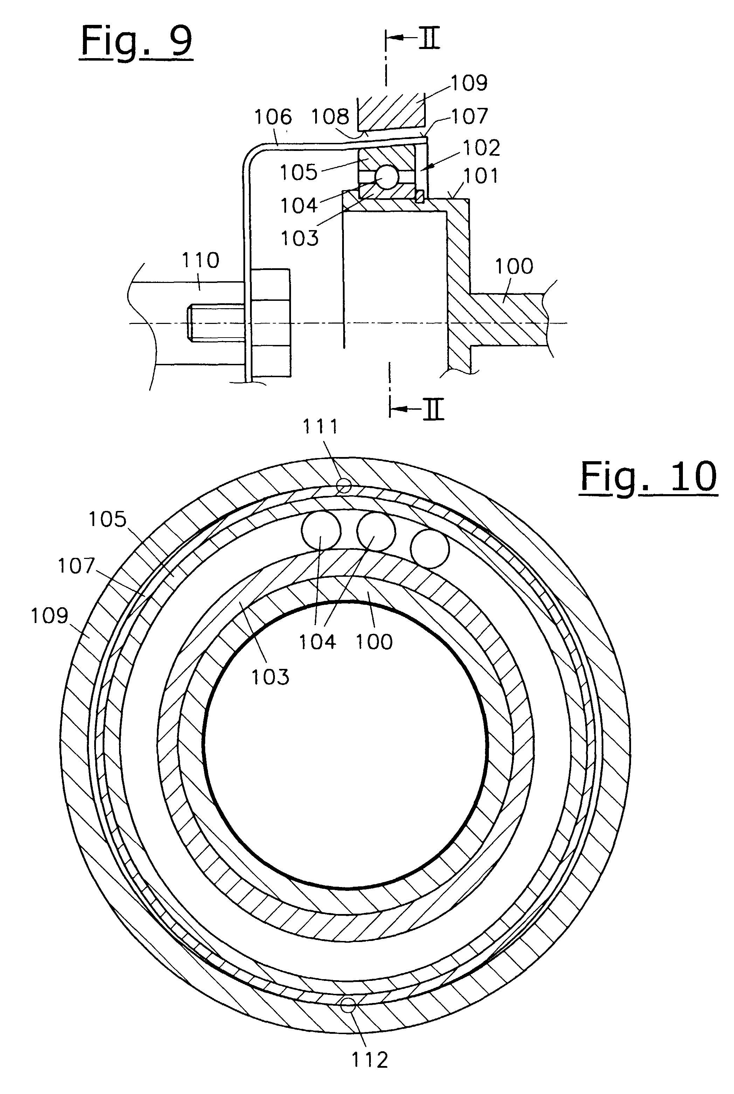

Das Getriebe der Fig. 9 besteht aus einer Antriebswelle 100, die an ihrem Ende eine Sitzfläche 101 aufweist, auf der ein Wälzlager 102 aufgekeilt ist, das als Kugellager ausgebildet ist. Das Wälzlager 102 besitzt einen Innenring 103, dessen äußerer Umfang elliptisch ausgebildet ist. Durch die Wälzkörper 104 wird der flexible Außenring 105 in eine elliptische Form gebracht. Da der äußere Umfang des Außenrings 105 leicht abgeschrägt ist, nimmt er insgesamt die Form eines elliptischen Kegels an. Am Außenring 105 liegt ein flexibler Eingriffsteil 106 an. Am äußeren Umfang des Eingriffsteils 106 ist die zweite Eingriffsfläche 107 angeordnet, die mit einer ersten Eingriffsfläche 108 in Eingriff steht, die am inneren Umfang eines ersten Eingriffsteils 109 angeordnet ist. Die erste Eingriffsfläche 109 ist kreiskegelförmig ausgebildet. Mit dem Eingriffsteil 106 steht eine Abtriebswelle 110 in Verbindung. Anstelle eines elliptischen Innenrings 103 kann auch ein dünnwandiger Innenring mit gleichmäßiger Dicke verwendet werden, der auf einer elliptischen Sitzfläche befestigt ist, so dass sich durch elastische Verformung eine elliptische Umfangsfläche ergibt.

In der Folge wird die Wirkungsweise der erfindungsgemäßen Vorrichtung näher erklärt. In der in der Fig. 10 dargestellten Lage berühren sich die Eingriffsflächen 107 und 108 in den einander gegenüberliegenden Bereichen 111 und 112. Bei einer Umdrehung der Antriebswelle 100 wandern diese Bereiche 111 und 112 entlang der ersten Eingriffsfläche 108 bis in ihre ursprüngliche Lage. Die zweite Eingriffsfläche 107 rollt dabei auf der ersten Eingriffsfläche 108 ab. Da jedoch der Umfang $U_1$ der ersten Eingriffsfläche 108 geringfügig größer ist als der Umfang $U_2$ der zweiten Eingriffsfläche 107, dreht sich der Eingriffsteil 106 geringfügig entgegen der Drehrichtung der Antriebswelle 100. Das Übersetzungsverhältnis i, definiert durch die Drehzahl der Antriebswelle gebrochen durch die Drehzahl der Abtriebswelle, entspricht dem Kehrwert der Exzentrizität $\varepsilon$, wenn diese nach folgender Gleichung definiert ist:

$$\varepsilon = (U_1 - U_2)/U_1$$

Je nach der Auswahl der verwendeten Materialien können Werte von $i = 1/\varepsilon$ in einem Bereich von 100 bis 300 und darüber hinaus erzielt werden. Generell kann das Übersetzungsverhältnis um so größer werden, je härter die Materialien sind, die für die Eingriffsflächen 107 und 108 verwendet werden.

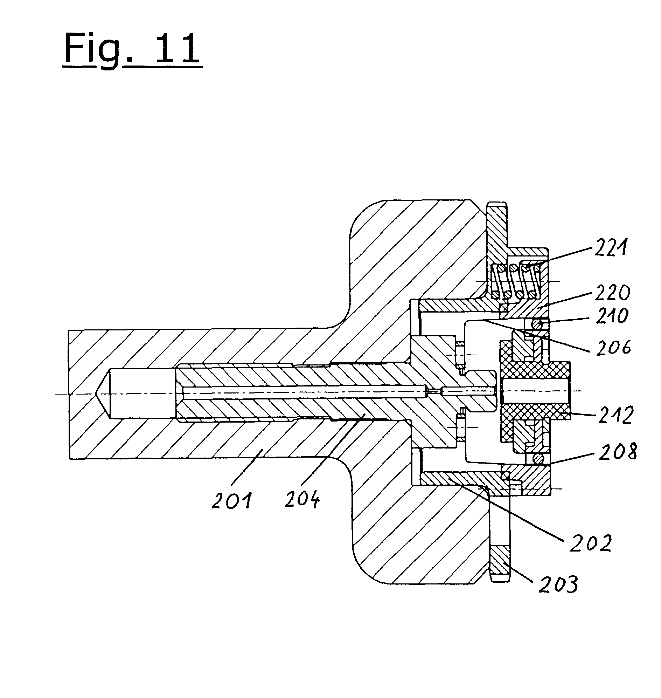

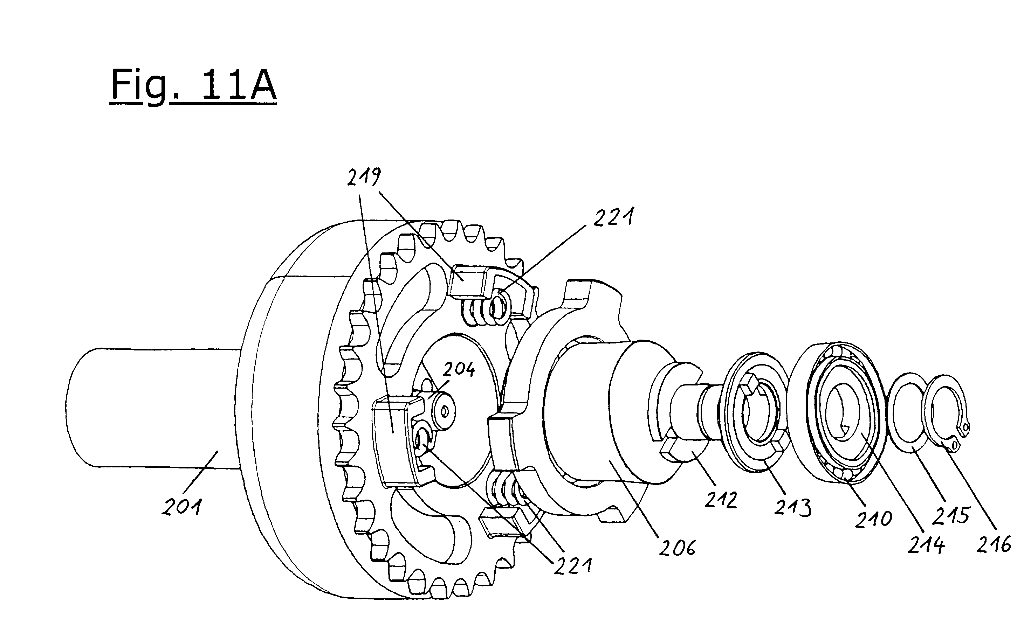

Die Fig. 11 zeigt ein erfindungsgemäßes Getriebe, das Teil einer Verstelleinrichtung für die Nockenwelle einer nicht näher dargestellten Brennkraftmaschine ist.

An der Nockenwelle 201 ist mit einer Schraube 204 ein als dünnwandiger Zylinder ausgebildetes Reibrad 206 befestigt, das den flexiblen Eingriffsteil bildet. Relativ zur Nockenwelle 201 verdrehbar ist eine Hülse 202, an der ein Kettenrad 203 einstückig angeformt ist. Ein Wälzlager 210 ist elliptisch ausgebildet, so dass das Reibrad 206 mit einem Eingriffsbereich der Hülse 202 nur an zwei in Umfangsrichtung gegenüberliegenden Stellen in Eingriff steht. Der Umfang des Reibrades 206 ist geringfügig kleiner als der der Eingriffsfläche 208, die auf einem in Bezug auf die Hülse 202 in Axialrichtung verschiebbaren Ring 220 angeordnet ist und ein Hohlrad bildet. Der Innenring des Wälzlagers 210 ist fest in einem Antriebselement 212 verbunden, das mit einem nicht dargestellten Verstellmotor in Verbindung steht.

Um den erforderlichen Anpressdruck des Reibrades 206 auf dem Ring 220 dauernd zu gewährleisten, ist eine Feder 221 vorgesehen, die den Ring 220 gegenüber der Hülse 202 vorspannt.

In der Fig. 11A zeigt eine Explosionsdarstellung den Aufbau des obigen Getriebes. Der Ring 220 ist in Führungen 219 auf dem Kettenrad 203 axial verschiebbar, jedoch verdrehfest gelagert. Das Antriebselement 212 ist über einen Ring 213 mit einem Träger 214 für den Innenring des Wälzlagers 210 verbunden. Die Verbindung ist durch eine Scheibe 215 und einen Seegerring 216 gesichert.

Die vorliegende Erfindung ermöglicht es, eine elektromotorische Verstellung der Nockenwelle einer Brennkraftmaschine zu schaffen, die besonders einfach aufgebaut ist, und die aufgrund der Vermeidung jeglicher Schleifkontakte besonders robust und langlebig ist.

**Patentansprüche**

1. Vorrichtung zur Verstellung einer Nockenwelle (1) einer Brennkraftmaschine mit innerer Verbrennung, mit einem Antriebsrad (3) zum Antrieb einer Nockenwelle (1), das koaxial zur Nockenwelle (1) angeordnet ist, sowie mit einem Elektromotor zur Verdrehung der Nockenwelle (1) in Bezug auf das Antriebsrad (3), wobei der Elektromotor zwei konzentrisch zueinander angeordnete Rotoren (2, 5) aufweist, von denen einer mit der Nockenwelle (1) und der andere mit dem Antriebsrad (3) in Verbindung steht, **dadurch gekennzeichnet**, dass mit einem der Rotoren (2, 5) eine erste Spulenanordnung (17, 27, 37, 58) verdrehfest verbunden ist, die mit einer feststehenden Spulenanordnung (16, 26, 36, 59) in elektromagnetischer Wechselwirkung steht, um die für den Betrieb des Elektromotors erforderliche Energie zu induzieren oder zu übertragen.

2. Vorrichtung nach Anspruch 1, **dadurch gekennzeichnet,** dass der Elektromotor mit einem Untersetzungsgetriebe (56) in Verbindung steht, um eine Relativbewegung zwischen dem Antriebsrad (3) und der Nockenwelle (1) innerhalb eines vorbestimmten Winkelbereichs zu bewirken, wobei das Untersetzungsgetriebe (56) zwischen einem der Rotoren (2, 5) und der Nockenwelle (1) angeordnet ist.

3. Vorrichtung nach Anspruch 2, **dadurch gekennzeichnet,** dass das Untersetzungsgetriebe als Harmonic-Drive-Getriebe (16) ausgebildet ist, das aus einem starren, kreisförmigen Hohlrad (8) und einem flexiblen außen verzahnten Zahnrad (6) besteht, das auf einem Wälzlager (10) mit elliptischem Innenring (11) angeordnet ist und das mit dem Hohlrad (8) in Eingriff steht.

4. Vorrichtung nach Anspruch 3, **dadurch gekennzeichnet,** dass ein Rotor (12) mit dem elliptischen Innenring (11) des Wälzlagers (10) direkt verbunden ist und dass das innen verzahnte Zahnrad (8) fest mit dem anderen Rotor (2) verbunden ist.

5. Vorrichtung nach Anspruch 2, **dadurch gekennzeichnet,** dass das Getriebe aus folgenden Bauteilen besteht: einer ersten Eingriffsfläche (108, 208), die am inneren Umfang eines ersten Eingriffsteils (109) angeordnet ist, einer zweiten Eingriffsfläche (107), die am äußeren Umfang eines flexiblen Eingriffsteils (106, 206) angeordnet ist und mit der ersten Eingriffsfläche (108, 208) in Eingriff steht, und einem zum ersten Eingriffsteil (109) und zum flexiblen Eingriffsteil (106, 206) koaxialen Treibteil, an dem ein Wälzlager (102, 210) mit einem unrund ausgebildeten Innenring (103) angeordnet ist, das einen flexiblen Außenring (105) aufweist, der mit dem flexiblen Eingriffsteil (106, 206) verbunden ist und diesen an vorzugsweise zwei Stellen gegen den ersten Eingriffsteil (109) drückt, wobei die erste Eingriffsfläche (108, 208, 308) des ersten Eingriffsteils (109) mit der zweiten Eingriffsfläche (107) des flexiblen Eingriffsteils (106, 206) in einer reibschlüssigen Verbindung steht.

6. Vorrichtung nach Anspruch 5, **dadurch gekennzeichnet,** dass der Innenring (103) des Wälzlagers (102, 210) im Querschnitt elliptisch ausgebildet ist.

7. Vorrichtung nach einem der Ansprüche 5 oder 6, **dadurch gekennzeichnet,** dass ein vorzugsweise als Feder (221) ausgebildetes Anpressmittel vorgesehen ist, das die erste Eingriffsfläche (208) in Axialrichtung auf die zweite Eingriffsfläche drückt.

8. Vorrichtung nach einem der Ansprüche 1 bis 7, **dadurch gekennzeichnet,** dass ein Rotor des Elektromotors als im wesentlichen rohrförmige Hülse (2) ausgebildet ist, die an ihrem inneren Umfang eine Wicklung (15) trägt, die mit einer Wicklung (14) oder einem Permanentmagneten am anderen Rotor (12) in elektromagnetischer Wechselwirkung steht, und dass die vorzugsweise fest mit dem Antriebsrad (3) verbundene Hülse (2) an ihrem äußeren Umfang eine Spulenanordnung (17, 27, 37) aufweist, die mit einer feststehenden Spulenanordnung (16, 26, 36) zusammenwirkt.

9. Vorrichtung nach einem der Ansprüche 1 bis 8, **dadurch gekennzeichnet,** dass der innere der beiden Rotoren (12) rohrförmig ausgebildet ist.

**10.** Vorrichtung nach einem der Ansprüche 1 bis 9, **dadurch gekennzeichnet,** dass die Spulenanordnungen (16, 17; 26, 27; 36, 37) jeweils aus mindestens einer Wicklung bestehen, die im wesentlichen in Umfangsrichtung angeordnet ist.

**11.** Vorrichtung nach einem der Ansprüche 1 bis 10, **dadurch gekennzeichnet,** dass ein Rotor (2) mit dem anderen Rotor (12) über ein Flachbandkabel (22) verbunden ist, um elektrische Energie zur Ansteuerung eines Rotors (12) zu übertragen, und dass an dem Rotor (12) vorzugsweise ein elektronisches Steuergerät (41) vorgesehen ist, um Steuersignale auszuwerten, die über das Flachbandkabel (22) übertragen werden.

**12.** Vorrichtung nach einem der Ansprüche 1 bis 11, **dadurch gekennzeichnet,** dass jeder der beiden Rotoren (2, 12) mit einer unabhängigen Spulenanordnung (17, 27) ausgestattet ist, von denen jede mit einer entsprechenden feststehenden Spulenanordnung (16, 26) in Wirkverbindung steht.

**13.** Vorrichtung nach einem der Ansprüche 1 bis 12, **dadurch gekennzeichnet,** dass die erste Spulenanordnung (58) und die feststehende Spulenanordnung (59) als Drehstromgenerator ausgebildet sind.

**14.** Vorrichtung nach Anspruch 13, **dadurch gekennzeichnet**, dass die feststehende Spulenanordnung (59) eine Polzahl besitzt, die größer ist als die der Rotoren des Elektromotors.

**15.** Vorrichtung nach einem der Ansprüche 1 bis 14, **dadurch gekennzeichnet,** dass ein Rotor als Kurzschlussläufer ausgebildet ist, der vorzugsweise über ein Getriebe (56) mit der Nockenwelle (1) verbunden ist.

**16.** Vorrichtung nach einem der Ansprüche 1 bis 15, **dadurch gekennzeichnet,** dass das Antriebsrad (3) über einen reibschlüssigen Antrieb mit der Kurbelwelle (1) in Verbindung steht.

# Fig.1

Fig.1A

EP 1 039 100 A2

# Fig.2

# Fig.3A   Fig.3B   Fig.3C   Fig.3D

EP 1 039 100 A2

# Fig.4

Fig.5

# Fig. 6

## Fig. 7

## Fig. 8

## Fig. 9

## Fig. 10

# Fig. 11

EP 1 039 100 A2

## Fig. 11A